# EUROPEAN PATENT APPLICATION

(11) **EP 1 835 455 A1**
(43) Date of publication of application: **19.09.2007**
(21) Application number: 05701658.6
(22) Date of filing: 05.01.2005
(51) Int. Cl.: G06Q 50/00, G06F 17/30

(54) **SYSTEM AND METHOD FOR RECOMMENDING MULTIMEDIA ELEMENTS**

(71) Applicant: Musicstrands, S.A.U., 08600 Berga, Barcelona (ES)
(72) Inventor: MARTIN CERVERA, Francisco José, Corvallis, OR 97330 (US); PLAZA I CERVERA, Enric, E-08005 Barcelona (ES); TORRENS, Marc, Corvallis, OR 97330 (US)
(74) Representative: Gonzalez-Alberto Rodriguez, Natalia
(86) International application number: PCT/ES2005/000003
(87) International publication number: WO 2006/075032

(57) **Abstract**

The present invention relates to a system and method for recommending multimedia elements comprising:
- means for identifying the number of times that a user has accessed or accessed and played a musical piece or multimedia element in a certain time period, and
- means for arranging said identified pieces in the form of a preference or relevance profile for said user, taking into account the following indicators:
- number of accesses, or accesses and plays, per piece for said certain time period, and
- number of accesses, or accesses and plays, per piece during a sub-period located in a last section of said certain time period.

The method proposes a recommendation made from a plurality of preference profiles of multiple users, generally comparing the preference profile of a user with the remaining preference profiles of other users.

## Description

### Field of the Art

The present invention generally relates to a system and method for recommending multimedia elements, and more particularly to a system and method applicable to the music recommendation to a user.

### Prior State of the Art

Ascertaining a user's tastes relating to any type of products is the basis for establishing a good commercial strategy for adjusting the supply to the demand, offering the users only or preferably products that may interest them. Any minimally rigorous market study takes the foregoing into account to adjust said supply.

However, said market studies can be somewhat slow, or at least not as fast as desired when they are specific quick to access and consume products.

This is the case of multimedia elements, specifically of the supply and access to on-line music, such as through Internet for example, which has experienced a considerable increase in demand in recent years as the technology making it possible has considerably evolved.

Different proposals aimed at achieving an improvement in said supply and access to multimedia elements, preferably on-line, are known.

Reference is made in some of them to methods for recommending music or other audiovisual mediums present in a database by means of a score assigned to each medium according to preferences set to a user profile, usually scores that the user gives to different songs or albums.

This is the case of US patent 6, 657, 116, which proposes a system that allows elaborating a list of songs suited to this user out of the songs available in a library containing different albums with several songs each once the user preferences are set. The user profile contains scores by the user for the albums and songs in the library.

Another proposal representing the state of the art is US patent 6,334,127. It consists of an electronic processing system that makes a recommendation to a user in part randomly, combining it with user preferences and community preferences.

Finally, patent application US2003/0089218 relates to a system and method for predicting musical tastes and/or preferences of a user. On one hand the system receives scores from the user for songs or else other information on the user's tastes, and on the other hand it receives data on the available songs to recommend. The method combines the two types of information to thus carry out a selection that the user will foreseeably like. It is based on neuronal networks or on mapping for creating a matrix of pseudo-distances between each pair of selections.

### Explanation of the Invention

It is necessary to offer an alternative to the state of the art by means of providing a specific way of ascertaining the tastes of a series of users and of using this ascertainment to offer a series of recommendations relating to multimedia elements to a user, all this being carried out automatically.

In a first aspect, the present invention relates to a system for recommending multimedia elements applicable to the music recommendation to a user of the type comprising:
- means for accessing and playing musical pieces by a series of users; and
- means for ascertaining the musical preferences of each one of said users, likewise comprising:
- identification means for automatically identifying the number of times that each one of said users has accessed or accessed and played at least in part each one of said musical pieces in a certain time period, and
- arranging means associated to said identification means for arranging said identified pieces in the form of a preference or relevance profile for each one of said users, taking into account the following indicators:
- said number of accesses, or accesses and plays, per piece for said certain time period, and
- the number of accesses, or accesses and plays, per piece during a sub-period located in a last section of said certain time period.

The system comprises a database associated to said arranging means for storing the mentioned preference profiles, each of which corresponding to a user, obtained according to said arrangement for each of said users according to said indicators.

Both the mentioned identification means and said arranging means and said database are associated synchronously so as to enable updating the preference profiles of the database for each user.

The system likewise comprises means of supplying recommendations associated to said database so as to select and supply to each of the users a series of recommendations of a series of musical pieces according to their relevance within a certain number of said preference profiles.

The system is preferably based on the use of a series of first devices, at least one per user (although they could be more than one in number), arranged in a series of local points, each of them accessible by a user, and a second device arranged at a remote point with respect to said local points.

Each of said first devices comprise at least part of said means for accessing and playing musical pieces, and said second device comprises said database.

In one embodiment, the first devices comprise storage means where said musical pieces are stored, although other embodiments are possible in which the pieces are stored somewhere else, or for example are simply transmitted to each of the first devices.

The second device is bidirectionally intercommunicated with all the first devices so as to allow the identification and the mentioned supply of recommendations.

The first devices can be of a wide variety of types, such as for example: portable audio players, mobile telephones, electronic agendas, personal computers, television sets, audio equipment and video equipment, and said second device is preferably a computer acting as a service providing server.

The mentioned bidirectional intercommunication between the first devices and the second device is carried out through a communications network, such as a: mobile or land telephony network, local, mid- or long-range computer network, land or wireless television network, although any other network that a person skilled in the art would consider would be possible.

In a more elaborate embodiment contemplating greater interactivity, each of the users can modify his/her profile that is registered in the mentioned database, adjusting it more to his/her taste at a specific time by means of selecting one or more lists out of a series of lists of musical pieces. To that end, each of the first devices comprises selection means associated to the mentioned means for ascertaining the musical preferences of each user, accessible by the user.

Some examples of such lists would be those encompassing a type of music (pop, rock, blues, etc.) to be chosen by the user.

In addition to the simple direct choice by a user of one of the mentioned lists, the first devices comprise activity detection means in association with said selection means for detecting the activity carried out by the user and selecting, according to said activity, at least one list out of a series of lists of musical pieces, and thus modifying his/her respective preference profile in said database.

In one embodiment, said activity detection means comprise a detector element for detecting the activity carried out by the user, such as a movement sensor, a camera, a heart rhythm detector, etc., in this sense being able to detect, for example, if the user is performing any physical activity or is resting and thus adapting the offer of musical recommendations to said activity.

In a second aspect the present invention relates to a method for recommending multimedia elements applicable to the music recommendation to a user, comprising the following steps:
a) identifying the number of times that at least one user has accessed or accessed and played at least in part each one of a series of musical pieces in a certain time period, and
b) arranging said identified pieces in the form of a preference or relevance profile for said user, who is at least one in number, taking into account:
   - a first indicator relating to said number of accesses or accesses and plays per piece for said certain time period, and
   - a second indicator relating to the number of accesses or accesses and plays per piece during a sub-period located in a last section of said certain time period.

   After said step b), the method comprises carrying out said steps, a) and b) for several users, generating after said step b) a preference profile for each one of said users, said profiles being stored for example in a database such as the one proposed by the first aspect of the present invention.
   Once the mentioned preference profiles are created, the proposed method comprises:
c) selecting and supplying to each of the users at least one recommendation of a musical piece, although preferably several recommendations, taking into consideration their relevance within said preference profiles.

Such recommendations are carried out automatically or in response to a corresponding request by a user.

The way to carry out said step c), i.e. how said recommendations are selected and supplied based on the preference profiles of the users, shall be explained in more detail below.

First, however, steps a) and b) of the proposed method are explained in more detail below than what they are explained above.

Said step a) is preferably carried out for several certain time periods and said arrangement of said step b) is carried out according to said number of accesses or accesses and plays for said certain time periods in the reverse order of the succession of said time periods from more to least recent.

In one embodiment, step b) also comprises arranging the identified pieces for a user according to the time percentage that said user has maintained access or access and play to each of them as regards the total duration of each of them.

Continuing with step b), said arrangement is carried out by assigning different weights or levels of importance to the different identified pieces depending on the mentioned first and second indicators.

The weight or levels of importance assigned to the pieces identified as accessed or accessed and played within said sub-period are preferably greater than those of the accessed or accessed and played pieces outside of it, i.e. if a first musical piece has been played for example ten times during the mentioned time period but it was not played at all during the mentioned sub-period, and in contrast a second piece was played only ten times, all of them within said sub-period, said second piece will have a higher level of importance that the first one and will therefore have a higher position in a possible list made by means of the arrangement of step b) of the proposed method.

In other words, when calculating the relevance that each musical piece has for a certain user, for the purpose of carrying out the arrangement of step b) and thus obtaining a preference profile for said user, the mentioned indicators do not have the same importance, the second of these indicators having more weight in the calculation of said relevance.

To establish such difference of weights, the level of importance of the second indicator is preferably according to a parameter, which may be established previously without the user's intervention with a value that can be the same for all the users or different, or it can be a parameter that can be adjusted by the user, in this latter case the user establishing the importance he/she wishes to give to the songs that he/she has listened to recently compared to all the songs he/she has listened to for a certain time period.

A parameter can be established in a similar manner to modulate the weight of the first indicator.

The preference profiles explained until now encompass all the musical pieces accessed or accessed and played during the mentioned certain time period, arranged from most to least importance according to the criteria already explained.

Nevertheless, the method proposed according to the second aspect of the present invention also contemplates the possibility of reducing such profiles by disregarding some of the musical pieces and thus giving rise to smaller and therefore more manageable lists.

To that end the method comprises carrying out after step b) before step c), a step b1) for selecting and arranging only a percentage of the pieces accessed or accessed and played at least in part of each of the preference profiles, generating a preference sub-profile with said selected pieces for each user.

The mentioned percentage of musical pieces selected and arranged in said step b1) can be obtained based on different criteria. The following are some preferred examples:
- according to said first and second indicators, selecting the pieces of greater relevance after said arrangement.
- according to (at least) another indicator, different from the first and second indicators, relating to a series of classification criteria (established by the user) of a series of musical pieces forming several lists, said lists grouping the musical pieces, for example by: artist, genre, album or activity.

Other criteria for generating said sub-profiles are also possible, such as those based on a combination of the two preferred examples mentioned, or simply on the selection of only the musical pieces accessed or accessed and played in the mentioned sub-period, disregarding the rest.

In reference to step c) of the proposed method, i.e. the selection and supply of recommendations of musical pieces to a user, there are different ways of carrying it out.

The easiest way simply consists of comparing several musical pieces qualified as relevant in the preference profile of a user that a recommendation is to be given to, with the remaining preference profiles of the remaining users stored, and recommending that or those musical pieces that are also relevant for a certain number of users set by a threshold.

One defect of such way of making recommendations is that the user does not receive recommendations for musical pieces that he/she does not have.

For this reason the proposed method becomes so important for another embodiment that does contemplate the recommendation of new musical pieces to a user.

To that end it proposes recommending another additional musical piece or other additional musical pieces included as relevant in one or more of the remaining preference profiles of the remaining users for whom said compared musical pieces are also relevant and not included in the preference profile of the user to whom said recommendation is supplied.

A series of musical pieces in the preference profiles of other users similar to a user can thus be recommended to that user that will most likely be to his/her liking based on the close relationship thereof with respect to those that he/she is known to like.

The recommendation of only said additional musical pieces is also possible for another embodiment.

For another embodiment, the method comprises grouping the preference profiles of different users into a series of groups of preference profiles according to different considerations, such as the mentioned closely related tastes, in which case both the supply of recommendations and the selection thereof can be done for groups of user preference profiles rather than for individual user preference profiles similarly to that explained above.

The identification carried out according to the proposed method will generally be carried out for the musical pieces accessed or accessed and played in a device, such as the first devices proposed according to the first aspect of the present invention, a preference profile based on said device finally being obtained for a user following the remaining proposed steps.

However, it is possible that a user may have more than one of said devices of a first type, and therefore more than one preference profile, one per device, is obtained by applying the proposed method.

For these cases, the proposed method comprises creating a single preference profile for each user encompassing the different preference profiles associated to the different devices that each user has.

On the other hand, although both the proposed system and method according to the first and second aspects of the invention, respectively, are preferably applied to the recommendation of musical pieces, it is also possible to apply them for the recommendation of another type of multimedia element, such as images, videos or animations.

A person skilled in the art could introduce changes and modifications in the embodiments described without departing from the scope of the invention as it is defined in the enclosed claims.

### Description of a Use Example

A use of the system and method proposed by the present invention is described below and must be taken in an illustrative and non-limiting manner.

The existence of a series of users, each of which has a personal computer connected to Internet, is contemplated for said use example.

Each of said users has installed in his/her respective computer an application for detecting the music played in it, creating a record with the songs played versus the date and time they were played.

Every certain amount of time, said record is sent to a platform or remote computer which creates and stores in a database the user profiles explained above based on said records and on the proposed method explained above.

Said platform or remote computer acts, for example, like an internet server, housing and/or controlling a web page which offers a series of music-related recommendations. When each user accesses said page for the first time, he/she finds in that page access to an entire catalog of available musical pieces or a random selection. He/she will also find a link for downloading the mentioned application.

Once the user has used the downloaded application, the appearance of the web page changes with respect to his/her first visit, it being more personalized for said user. Specifically, the musical pieces that are shown have not been randomly chosen, but rather are based on the preference profile for said user and on its similarity with other preference profiles of other users.

Said arrangement is carried out by the server for each computer accessing its page, or for each user even though the user accesses the page from different computers by means of introducing a user name and password.

Such profiles can be updated every certain amount of time and be adapted to different certain time periods so that the musical offer does not become antiquated or does not depend on the user's tastes from some time ago and not on the current moment. An example of such update would be to give more prominence or weight to the musical pieces played in the past few days with respect to those previously played. Another example would be to disregard the pieces played prior to said past few days even though in this case the change in the offer would be more abrupt.

This is obviously only one use example for the system and method proposed by the present invention. Other examples having nothing to do with Internet, and therefore with different identification means, would also be possible.

## Claims

1. A system for recommending multimedia elements applicable to the music recommendations to a user, of the type comprising:
- means for accessing and playing musical pieces by at least one user;
- means for ascertaining the musical preferences of said user, who is at least one in number
**characterized in that** said means for ascertaining the musical preferences of said user comprise:
- identification means for automatically identifying the number of times that said user has accessed or accessed and played at least in part each one of said musical pieces in a certain time period, and
- arranging means associated to said identification means for arranging said identified pieces in the form of a preference or relevance profile for said user, who is at least one in number, taking into account the following indicators:
- said number of accesses, or accesses and plays, per piece for said certain time period, and
- the number of accesses, or accesses and plays, per piece during a sub-period located in a last section of said certain time period.

2. A system according to claim 1, **characterized in that** it comprises a database associated to said arranging means for storing a series of preference profiles, each of which corresponding to a user and obtained according to said arrangement for each one of said users according to said indicators.

3. A system according to claim 2, **characterized in that** said identification means, said arranging means and said database are synchronously associated so as to enable updating the preference profiles of the database for each user.

4. A system according to claim 2 or 3, **characterized in that** it comprises recommendation supply means associated to said database for selecting and supplying to each of the users at least one recommendation of a musical piece according to its relevance within a certain number of said preference profiles.

5. A system according to claim 4, **characterized in that** it comprises a series of first devices, at least one per user, arranged in a series of local points, each of them accessible by the user, and at least one second device arranged at a remote point with regard to said local points, said second device being bidirectionally intercommunicated with all the first devices so as to allow said identification and said supply of recommendations, and each one of said first devices comprising at least part of said means for accessing and playing musical pieces, and said second device said database.

6. A system according to claim 4 or 5, **characterized in that** said first devices are, each one of them, at least one of the group consisting of: mobile telephones, electronic agendas, personal computers, television sets, audio equipment and video equipment, and said second device is a computer acting as a service server.

7. A system according to claim 5 or 6, **characterized in that** said first devices are intercommunicated with said second device through a communications network, which is one of the group consisting of: mobile or land telephony network, local, mid- or long-range computer network, land or wireless television network.

8. A system according to claim 5 or 6, **characterized in that** said first devices comprise selection means associated to said means for ascertaining the musical preferences for each user to select at least one list out of a series of lists of musical pieces and thus modify his/her respective user profile in said database.

9. A system according to claim 8, **characterized in that** said first devices comprise activity detection means associated to said selection means so as to detect the activity carried out by a user and selecting, according to said activity, at least one list out of a series of lists of musical pieces and thus modifying his/her respective user profile in said database.

10. A method for recommending multimedia elements applicable to the music recommendation to a user, comprising the following steps:
a) identifying the number of times that at least one user has accessed or accessed and played at least in part each one of a series of musical pieces in a certain time period, and
b) arranging said identified pieces in the form of a preference or relevance profile for said user, who is at least one in number, taking into account:
- a first indicator relating to said number of accesses or accesses and plays per piece for said certain time period, and
- a second indicator relating to the number of accesses or accesses and plays per piece during a sub-period located in a last section of said certain time period.

11. A method according to claim 10, **characterized in that** it comprises carrying out said steps a) and b) for several users, generating after said step b) a preference profile for each one of said users and storing said profiles.

12. A method according to claim 11, **characterized in that** it comprises after having generated a series of profile preferences:
c) selecting and supplying to each of the users at least one recommendation of a musical piece taking into consideration their relevance within said preference profiles.

13. A method according to claim 12, **characterized in that** said recommendation, which is at least one in number, is carried out after a corresponding request by the user.

14. A method according to claim 12, **characterized in that** said step a) is carried out for several certain time periods and **in that** said arrangement in step b) is carried out according to said number of accesses or accesses and plays for said certain time periods in the reverse order of the succession of said time periods from more to least recent.

15. A method according to claim 14, **characterized in that** said step b) also comprises arranging said identified pieces for said user according to the time percentage that said user has maintained access or access and play to each of them as regards the total duration of each of them.

16. A method according to claim 10, **characterized in that** said arrangement is carried out by assigning different weights or levels of importance to the different identified pieces depending on said indicators.

17. A method according to claim 16, **characterized in that** it comprises assigning weights or levels of importance to the pieces identified as accessed or accessed and played within said sub-period greater than those of the accessed or accessed and played pieces outside of it.

18. A method according to claim 10 or 11, **characterized in that** said first and second indicators have a different level of importance from one another when each of said user profiles is obtained.

19. A method according to claim 18, **characterized in that** the level of importance of said second indicator is according to a predetermined parameter.

20. A method according to claim 18, **characterized in that** the level of importance of said second indicator is according to an adjustable parameter.

21. A method according to claim 11, **characterized in that** it comprises carrying out after said step b) and before said step c), a step b1) for selecting and arranging only a percentage of the pieces accessed or accessed and played at least in part of each of the preference profiles, generating a preference sub-profile with said selected pieces.

22. A method according to claim 21, **characterized in that** said step b1) is carried out according to said first and second indicators, selecting the pieces of greater relevance after said arrangement.

23. A method according to claim 21, **characterized in that** said step b1) is carried out according to another indicator, different from the first and second indicators, relating to a series of classification criteria of a series of musical pieces forming several lists.

24. A method according to claim 23, **characterized in that** said criteria are at least one of the group consisting of: artist, genre, album or activity.

25. A method according to claim 24, **characterized in that** said criteria are established by a user.

26. A method according to claim 12, **characterized in that** it comprises for said step c) selecting and supplying said recommendation of a musical piece to a user, who is at least one in number, after comparing several musical pieces qualified as relevant in the preference profile of said user with the remaining preference profiles of the remaining users stored, that or those musical pieces that are also relevant for a certain number of users, set by a threshold, being recommended .

27. A method according to claim 26, **characterized in that** it comprises further recommending another additional musical piece or other additional musical pieces included as relevant in one or more of the remaining preference profiles of the remaining users for whom said compared musical pieces are also relevant, said recommended additional musical pieces not being included in the preference profile of the user to whom said recommendation is supplied.

28. A method according to claim 12, 26 or 27, **characterized in that** it comprises carrying out step c) for a plurality of musical pieces.

29. A method according to claim 28, **characterized in that** it comprises grouping said preference profiles of different users in a series of groups of preference profiles.
